# EUROPEAN PATENT APPLICATION

(11) **EP 3 654 205 A1**
(43) Date of publication of application: **20.05.2020**
(21) Application number: 19209257.5
(22) Date of filing: 14.11.2019
(51) Int. Cl.: G06F 16/732, G06F 3/01

(54) **SYSTEMS AND METHODS FOR GENERATING HAPTIC EFFECTS BASED ON VISUAL CHARACTERISTICS**

(30) Priority: 14.11.2018 US 201816190680
(71) Applicant: Immersion Corporation, San Jose, CA 95134 (US)
(72) Inventor: SABOUNE, Jamal, Montreal, Québec H2W 2R2 (CA); CRUZ-HERNANDEZ, Juan Manuel, Montreal, Québec H2W 2R2 (CA)
(74) Representative: McDougall, Robert Campbell

(57) **Abstract**

Systems and methods (200) for designing haptic effects based on visual characteristics haptics are disclosed. One illustrative system described herein includes a user input device (112, 116), a memory (104), a haptic output device (118), and a processor (102) in communication with the user input device and memory. The processor is configured to: receive (202) an input having a plurality of characteristics, at least one of the plurality of characteristics associated with a first shape, identify (204) an image or label associated with the first shape, and identify (206) a haptic effect associated with the image or label. The processor is further configured to associate (208) the haptic effect with the first shape, and transmit (210) a haptic signal associated with the haptic effect to the haptic output device, the haptic signal causing the haptic output device (118) to output the haptic effect.

## Description

### Field of the Invention

The present application relates to the field of user interface devices. More specifically, the present application relates to generating haptic effects based on visual characteristics.

### Background

To create more immersive visual experiences, including in gaming and video applications, content creators have utilized more complex and higher definition video and audio systems. Content creators have also included haptic effects to further enhance the experience of the gamer or viewer. However, conventional systems for recognizing visual objects and assigning individual haptic effects to those images can be difficult and time-consuming and may lead to sub-optimal results. Systems and methods for enhancing a haptic designer's ability to assign haptic effects to video images are needed.

### Summary

In a first aspect of the present invention there is provided a system for designing haptic effects based on visual characteristics. The system may comprise any one or more of: a user input device, a memory, a haptic output device, and a processor in communication with the user input device and memory. The processor may be configured to: receive an input having a plurality of characteristics, at least one of the plurality of characteristics associated with a first shape. The processor may be configured to identify an image or label associated with the first shape. The processor may be configured to identify a haptic effect associated with the image or label. The processor may be further configured to associate the haptic effect with the first shape, and transmit a haptic signal associated with the haptic effect to the haptic output device, the haptic signal causing the haptic output device to output the haptic effect. The first aspect may be modified according to any suitable way described herein including, but not limited to, any of the optional features described for the sixth aspect.

In a second aspect of the present invention there is provided a method for designing haptic effects based on visual characteristics. The method may comprise receiving an input having a plurality of characteristics, at least one of the plurality of characteristics associated with a first shape. The method may comprise identifying an image or label associated with the first shape. The method may comprise identifying a haptic effect associated with the image or label. The method may comprise associating the haptic effect with the first shape. The second aspect may be modified according to any suitable way described herein including, but not limited to, any of the optional features described for the fifth aspect.

In a third aspect of the present invention there is provided a computer readable medium may comprise program code, which when executed by a processor is configured to perform such a method as described in the second aspect.

In a fourth aspect of the present invention there is provided a non-transitory computer readable medium comprising program code, which when executed by a processor is configured to cause the processor to: receive an input having a plurality of characteristics, at least one of the plurality of characteristics associated with a first shape; identify an image or label associated with the first shape; identify a haptic effect associated with the image or label; and, associate the haptic effect with the first shape. The fourth aspect may be modified according to any suitable way described herein including, but not limited to, any one or more of the following.

The computer-readable medium may further comprise program code, which when executed, is configured to: identify a second shape in the image; and, identify the haptic effect based at least in part on the similarity between the first shape and the second shape.

The image may comprise a frame from a video.

The computer-readable medium may further comprise program code, which when executed, is configured to suggest a plurality of haptic effects to be associated with the first shape.

The computer-readable medium may further comprise program code, which when executed, is configured to: identify an object associated with the first shape; and, identify the image containing the second shape similar to the first shape by searching for the object in a dataset containing a plurality of images.

The input may comprise a gesture. The input may comprise an image.

The computer-readable medium may further comprise program code, which when executed, is configured to associate the haptic effect with the first shape by recording the haptic effect to a haptic track, the haptic track associated with a video.

The computer-readable medium may further comprise program code, which when executed, is configured output the haptic effect to haptic effect generator.

In a fifth aspect of the present invention there is provided a method comprising: receiving an input having a plurality of characteristics, at least one of the plurality of characteristics associated with a first shape; identifying an image or label associated with the first shape; identifying a haptic effect associated with the image or label; and, associating the haptic effect with the first shape. The fifth aspect may be modified according to any suitable way described herein including, but not limited to, any one or more of the following.

The method may further comprise: identifying a second shape in the image; and, identifying the haptic effect based at least in part on the similarity between the first shape and the second shape.

The image may comprise a frame from a video.

The method may further comprise suggesting a plurality of haptic effects to be associated with the first shape.

The method may further comprise: identifying an object associated with the first shape; and, identifying the image containing the second shape similar to the first shape by searching for the object in a dataset containing a plurality of images.

The input may comprise a gesture. The input may comprise an image.

The method may further comprise associating the haptic effect with the first shape by recording the haptic effect to a haptic track, the haptic track associated with a video.

The method may further comprise outputting the haptic effect to haptic effect generator.

In a sixth aspect of the present invention there is provided a system comprising: a user input device; a memory; a haptic output device; and, a processor in communication with the user input device and memory, the processor configured to: receive an input having a plurality of characteristics, at least one of the plurality of characteristics associated with a first shape; identify an image or label associated with the first shape; identify a haptic effect associated with the image or label; associate the haptic effect with the first shape; and, transmit a haptic signal associated with the haptic effect to the haptic output device, the haptic signal causing the haptic output device to output the haptic effect.

The sixth aspect may be modified according to any suitable way described herein including, but not limited to, any one or more of the optional features described for the fourth and fifth aspects.

In a seventh aspect of the present invention there is provided a method comprising:
A) any one or more of:
   a. receiving an image of a user action; and, identifying a first shape associated with the user action;
   b. receiving a video signal; and, identifying a first shape associated with the video signal;
B) identifying a visual characteristic associated with the first shape;
C) any one or more of:
   a. identifying a label associated with the visual characteristic; and, identifying a haptic effect associated with the label;
   b. identifying an image associated with the visual characteristic; and, identifying a haptic effect associated with the image;
D) outputting a haptic signal associated with the haptic effect to be output.

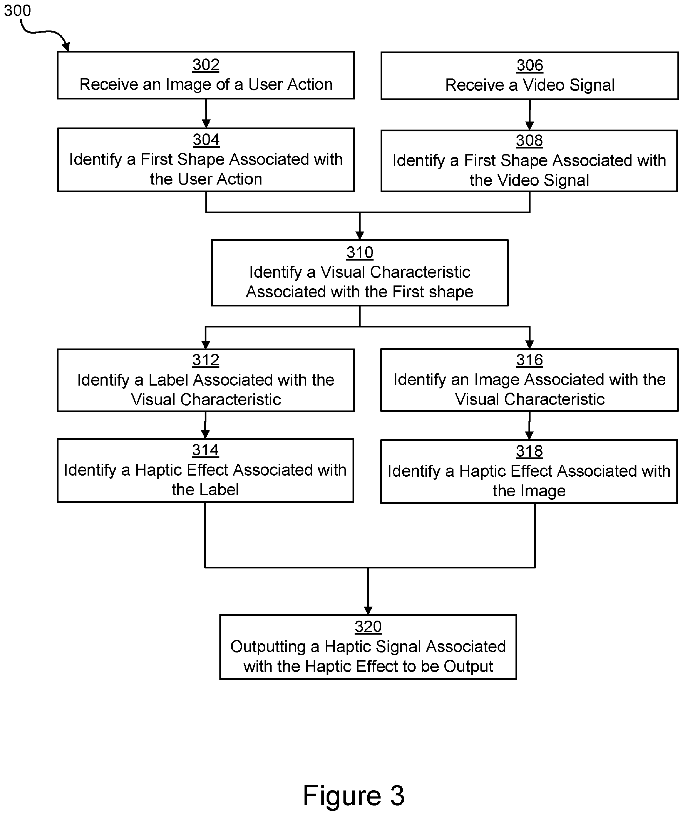

The seventh aspect may be modified according to any suitable way described herein including, but not limited to, the features described for figure 3.

These illustrative embodiments are mentioned not to limit or define the limits of the present subject matter, but to provide examples to aid understanding thereof. Illustrative embodiments are discussed in the Detailed Description, and further description is provided there. Advantages offered by various embodiments may be further understood by examining this specification and/or by practicing one or more embodiments of the claimed subject matter.

### Brief Description of the Drawings

A full and enabling disclosure is set forth more particularly in the remainder of the specification. The specification makes reference to the following appended figures.
Figure 1 shows an illustrative system for designing haptic effects based on visual characteristics.
Figure 2 is a flow chart of method steps for one example embodiment for designing haptic effects based on visual characteristics.
Figure 3 is a flow chart of method steps for another example embodiment for designing haptic effects based on visual characteristics.

### Detailed Description

Reference will now be made in detail to various and alternative illustrative embodiments and to the accompanying drawings. Each example is provided by way of explanation, and not as a limitation. It will be apparent to those skilled in the art that modifications and variations can be made. For instance, features illustrated or described as part of one embodiment may be used in another embodiment to yield a still further embodiment. Thus, it is intended that this disclosure include modifications and variations as come within the scope of the appended claims and their equivalents.

### Illustrative Example of a System for Generating Haptic Effects Based on Visual Characteristics

In one illustrative embodiment, a haptic designer is designing haptics for a video game. The designer wishes to add an effect to gunshots within the game. Rather than performing a search using, for instance, a text entry, the designer mimics the shape of a gun with her fingers in front of a digital camera in her laptop. The system identifies that the shape of her fingers have visual characteristics associated with a gun. The system then searches a database to identify haptic effects that are associated with images of guns that contain those same or similar visual characteristics, including those associated with a gunshot, and provides the list to the user. The designer can then select the effect or effects that she wishes to play for a gunshot. In some embodiments, the system may also be able to associate labels with the visual characteristics and use the label to search for haptic effects. For instance, the system identifies the visual characteristics associated with the shape of the designer's fingers, and determines that they are associated with a gun. However, rather than looking for images with the same characteristics, the system applies a label "gun" to the finger's shape. The system then uses the label "gun" to search for effects that are associated with a gun. The system provides the list to the user who then selects the appropriate effect.

In some embodiments, the system may analyze an image rather than a shape that the user mimics. For instance, the haptic designer may upload a clip and identify a particular frame or frames to be analyzed. The system identifies the visual characteristics of objects in the frame and then searches for images with those visual characteristics and for haptic effects associated with the images. Alternatively, the system may apply a label to objects in the frame and then search for haptic effects associated with the labels. The system can then provide the list of effects to the designer, who can chose the appropriate effect or effects to be played during the appropriate frame or frames of the video. The preceding examples are merely illustrative and not meant to limit the claimed invention in any way.

### Illustrative Systems for Generating Haptic Effect Generation Based on Visual Characteristics

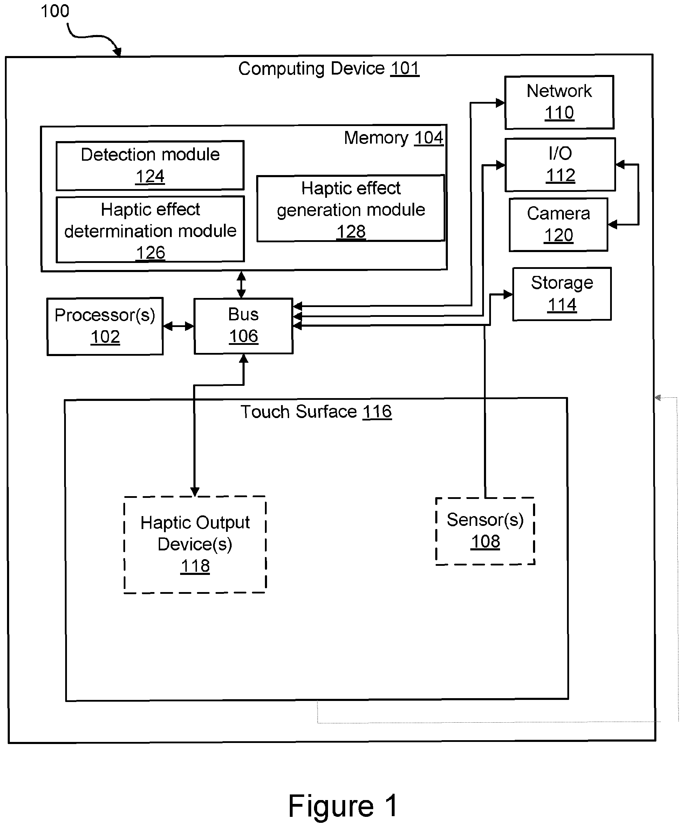

Figure 1 shows an illustrative system 100 for generating haptic effects using audio and video. Particularly, in this example, system 100 comprises a computing device 101 having a processor 102 interfaced with other hardware via bus 106. A memory 104, which can comprise any suitable tangible (and non-transitory) computer-readable medium such as RAM, ROM, EEPROM, or the like, embodies program components that configure operation of the computing device. In this example, computing device 101 further includes one or more network interface devices 110, input/output (I/O) interface components 112, additional storage 114, and a camera 120.

Network device 110 can represent one or more of any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network(s)).

I/O components 112 may be used to facilitate connection to devices such as one or more displays, touch screen displays, keyboards, mice, speakers, microphones, cameras, and/or other hardware used to input data or output data. Storage 114 represents nonvolatile storage such as magnetic, optical, or other storage media included in device 101. The camera 120 represents any sort of sensor able to capture visual images. The camera 120 may be mounted on a surface of the computing device 101 or may be separate. The camera 120 is in communication with the computing device 101 via an I/O port 112.

System 100 further includes a touch surface 116, which, in this example, is integrated into device 101. Touch surface 116 represents any surface that is configured to sense touch input of a user. One or more sensors 108 are configured to detect a touch in a touch area when an object contacts a touch surface and provide appropriate data for use by processor 102. Any suitable number, type, or arrangement of sensors can be used. For example, resistive and/or capacitive sensors may be embedded in touch surface 116 and used to determine the location of a touch and other information, such as pressure. As another example, optical sensors with a view of the touch surface may be used to determine the touch position.

In some embodiments, sensor 108, touch surface 116, and I/O components 112 may be integrated into a single component such as a touch screen display. For example, in some embodiments, touch surface 116 and sensor 108 may comprise a touch screen mounted overtop of a display configured to receive a display signal and output an image to the user. The user may then use the display to both view the movie or other video and interact with the haptic generation design application.

In other embodiments, the sensor 108 may comprise an LED detector. For example, in one embodiment, touch surface 116 may comprise an LED finger detector mounted on the side of a display. In some embodiments, the processor 102 is in communication with a single sensor 108, in other embodiments, the processor 102 is in communication with a plurality of sensors 108, for example, a first touch screen and a second touch screen. The sensor 108 is configured to detect user interaction and, based on the user interaction, transmit signals to processor 102. In some embodiments, sensor 108 may be configured to detect multiple aspects of the user interaction. For example, sensor 108 may detect the speed and pressure of a user interaction and incorporate this information into the interface signal.

Device 101 further comprises a haptic output device 118. In the example shown in Figure 1 haptic output device 118 is in communication with processor 102 and is coupled to touch surface 116. The embodiment shown in Figure 1 comprises a single haptic output device 118. In other embodiments, computing device 101 may comprise a plurality of haptic output devices. The haptic output device may allow a haptic designer to experience effects as they are generated in order to determine if they should be modified in any way before creating the final set of haptic effects for the video.

Although a single haptic output device 118 is shown here, embodiments may use multiple haptic output devices of the same or different type to output haptic effects. For example, haptic output device 118 may comprise one or more of, for example, a piezoelectric actuator, an electric motor, an electro-magnetic actuator, a voice coil, a shape memory alloy, an electro-active polymer, a solenoid, an eccentric rotating mass motor (ERM), or a linear resonant actuator (LRA), a low profile haptic actuator, a haptic tape, or a haptic output device configured to output an electrostatic effect, such as an Electrostatic Friction (ESF) actuator. In some embodiments, haptic output device 118 may comprise a plurality of actuators, for example a low profile haptic actuator, a piezoelectric actuator, and an LRA.

Turning to memory 104, exemplary program components 124, 126, and 128 are depicted to illustrate how a device may be configured to determine and output haptic effects. In this example, a detection module 124 configures processor 102 to monitor touch surface 116 via sensor 108 to determine a position of a touch. For example, module 124 may sample sensor 108 in order to track the presence or absence of a touch and, if a touch is present, to track one or more of the location, path, velocity, acceleration, pressure, and/or other characteristics of the touch over time.

Haptic effect determination module 126 represents a program component that analyzes data regarding visual characteristics or an image to determine or select a haptic effect to generate. Particularly, module 126 comprises code that determines, based on the visual characteristics of one or more images, an effect to generate and output by the haptic output device. Module 126 may further comprise code that selects one or more existing haptic effects to provide in order to assign to a particular combination of visual characteristics or based on a label determined based in part on the visual characteristics. For example, a user may mimic a shape that is captured by camera 120, the detection module 124 may determine that certain visual characteristics captured by the camera should be assigned a label, and then haptic determination module 126 determines that certain haptic effects are associates with that label. Different haptic effects may be determined or selected based on various combination of the visual characteristics. The haptic effects may be provided via touch surface 116 even in order that the designer can preview the effects and modify them as necessary to better model the scene or frame in the video or game. Haptic effect generation module 128 represents programming that causes processor 102 to generate and transmit a haptic signal to haptic output device 118, which causes haptic output device 118 to generate the selected haptic effect. For example, generation module 128 may access stored waveforms or commands to send to haptic output device 118. As another example, haptic effect generation module 128 may receive a desired type of haptic effect and utilize signal processing algorithms to generate an appropriate signal to send to haptic output device 118. As a further example, a desired haptic effect may be indicated along with target coordinates for the texture and an appropriate waveform sent to one or more actuators to generate appropriate displacement of the surface (and/or other device components) to provide the haptic effect. Some embodiments may utilize multiple haptic output devices in concert to simulate a feature. For instance, a variation in texture may be used to simulate crossing a boundary between buttons on an interface while a vibrotactile effect simulates the response when the button is pressed.

### Illustrative Methods for Generating Haptic Effects Based on Visual Characteristics

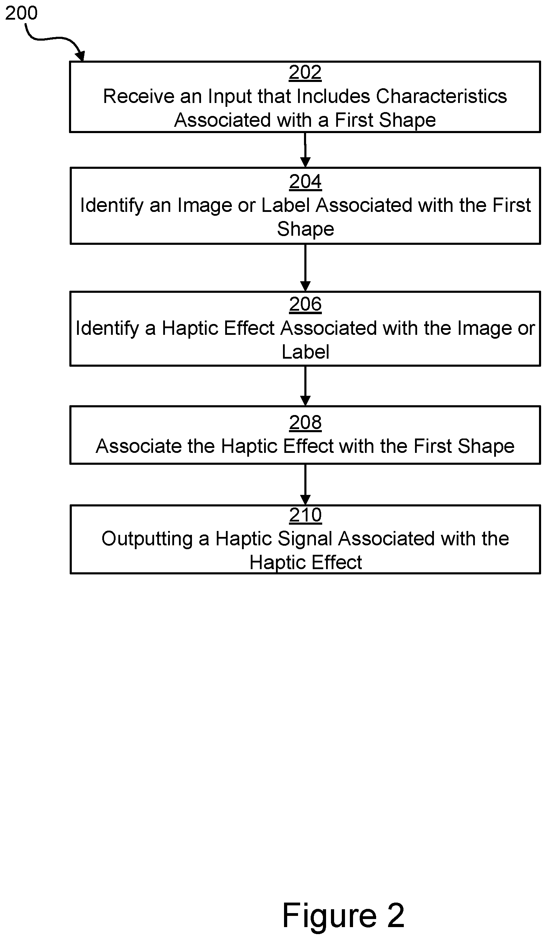

Figures 2 and 3 are flow charts of method steps for example embodiments for generating haptic effects based on visual characteristics. In the first step of the process, the system receives an input that includes one or more visual characteristics that are associated with a first shape 202. The input may derive from any number of different types of inputs.

For instance, in one embodiment, the haptic designer captures a frame from a pre-existing video. In one such embodiment, the haptic designer might identify a particular portion of a frame in which an object appears. In another embodiment, the system can identify multiple objects across multiple frames, which the haptic designer can then select for association with haptic effects. In another embodiment, the user outlines a shape on the touch surface 116 of computing device 101. The designer might also use the camera 120 to capture images. For instance, the designer may have a picture of a shape and use the camera 120 to capture the image. In yet another embodiment, the designer might mimic a shape with the designer's hand.

In some embodiments, the system may capture a movement, which can then be interpreted as an image by the determination module 124. For example, if a designer is attempting to mimic a car, the designer might move her hand in front of the camera 120 from left to right. The determination module 124 is programmed to recognize the movement as representing a car based on visual characteristics of the movement. Such movements might include, for example, a movement of a bird flapping is wings, or the swipe of a sword. In such embodiments, the entire movement is meant to convey a particular shape, which the determination module can recognize. While a camera 120 is illustrated in Figure 1 for capturing the image, other sensors might be used. For instance, virtual reality controllers and sensors might be used by a haptic designer. The visual characteristics may include sets of vectors that describe a particular image.

The process 200 continues by identifying an image or label associated with the first shape 204. For example, the detection module 124 may search for and identify stored images that include objects having similar visual characteristics. For instance, if the shape has the visual characteristics of a car, then the detection module 124 would find images of a car stored in, for example, a database. Once the characteristics are identified, various methods for finding such images may be utilized by embodiments. For instance, neural networks may be used to search for images based on visual characteristics.

In another embodiment, the visual characteristics are associated with a set of labels. That is, rather than searching for images with similar visual characteristics, the detection module 124 searches for labels associated with the set of visual characteristics. Then, once a label or labels is found with the visual characteristics, the label is used to continue the process.

The haptic effect determination module 126 next determines a haptic effect that is associated with the image or label 206. For example, the haptic effect determination module 126 may search a database of haptic effects associated with the images retrieved in step 204. In another embodiment, the haptic effect determination module 126 determines that certain haptic effects are associated with a pre-existing video and extracts those haptic effects. Then, the haptic designer can choose from the extracted effects in determining which effect or effects to associate with the shape. In another embodiment, the haptic effect determination module 126 searches a database of haptic effects associated with a label. For instance, if the label is "car," then the database may include haptic effects associated with an engine, squealing tires, a collision, or other objects and actions that may be associated with a car. If the label were "gun," then available effects might include gunshot- or ricochet-related effects.

The haptic effect determination module 126 next associates a haptic effect with the shape 208. For instance, if the designer mimics the shape of a gun and selects or creates a particular haptic effect, then that haptic effect is associated with the shape. Then, when similar shapes are encountered after the association, the effect that the designer selected or created can be presented to the designer for the similar shape.

Finally, the haptic effect generation module 128 outputs a haptic signal associated with the haptic effect 210. In this way, the designer can feel the selected haptic effect. The designer may then wish to modify the haptic effect or add additional haptic effects to further optimize the experience of a user.

The process 200 shown in Figure 2 may be executed on an image-by-image basis, could be performed on multiple frames in a video, identifying multiple objects simultaneously, or could be created on a haptic timeline associated with multiple frames in the video. The haptic timeline could be dynamic. Such an embodiment could automatically associate the same or similar shapes with the same haptic effect or effects, alleviating the need for a haptic designer to manually associate each shape with an effect. For example, the haptic designer might associate effects with a foundation of a game or to a particular level of a game. Once complete, the design tool might assign the same effects to all levels or phases of the game to alleviate the need for the designer to manually associate effects with each level.

Figure 3 is a flow chart of method steps for another example embodiment for generating haptic effects based on visual characteristics. In the embodiment shown in Figure 3, the process for capturing visual characteristics and determining haptic effects are shown in greater detail.

The process 300 begins when the system receives an image of a user action 302. For example, the haptic designer mimics holding a gun. The detection module 124 identifies a first shape associated with the user action 304. Alternatively, the system receives a video signal, such as a frame from a video or a series of frames from a game 306. The detection module 124 identifies a first shape associated with the video signal 308.

The result of either of these alternative processes is that the detection module 124 has identified a shape or multiple shapes. Once the shapes are identified, then the system is able to determine one or more visual characteristics of the shape 310. As described above, visual characteristics might include vectors of the shape. Such characteristics might also include color, relative size, speed, direction, location in the frame or space, or anything else that describes the visual characteristics of the shape. Such visual characteristics may include the action occurring in the scene.

The detection module may then identify a label associated with the visual characteristic 312. A variety of methods may be used to determine a label to associate with one or more visual characteristics. In some embodiments, the detection module 124 may identify a single shape. In such embodiments, the system can use machine-learning models such as "Inception," "AlexNet," or Visual Geometry Group ("VGG"), pre-trained on image classes databases (e.g., "Imagenet"). In other embodiments, where the detection module 124 identifies multiple objects in the input, the system can use more sophisticated pre-trained models (e.g., Single Shot Detector ("SSD"), Faster Region-Based Convolutional Neural Networks ("RCNN"), or Mask RCNN) to identify the different objects present. In the case of a video input the system can process it as independent frames and identify the objects present, and may attempt to identify the action in the video using successive frames. In such embodiments, the system may use machine learning models, such as 3D convolutional networks ("C3D"), long short-term memory ("LSTM") networks, or RNNs to encode the temporal aspect of the action. These models can be trained on video databases such as Youtube8M or the UCF101 dataset of human actions. Such embodiments rely on labels. The process continues by identifying a haptic effect associated with the label 314. In such an embodiment, the system searches a database for effects tagged with the label or labels identified in step 312. If more than one label has been identified, the system may search for effects that have all the labels. In another embodiment, the system may search for effects associated with any of the labels. In one such embodiment, the system prioritizes haptic effects based on the extent to which the effect is associated with all of the identified labels. In another embodiment, the effects may not be individually labeled but instead associated with videos or images that are themselves labeled. In such an embodiment, the effects associated with these labeled images may be returned. Various other embodiments utilizing indirect associations of labels and haptic effects may also be utilized.

In the embodiment shown in Figure 3, the process may alternatively identify an image associated with the one or more visual characteristics 316. Then, the system can use the image itself to identify haptic effects associated with the image 318. In one such embodiment, the system searches a database for images having features closest to the image identified in step 316. In one such embodiment, the distance between the visual characteristic features vectors can be estimated as a Euclidean or Mahalanobis distance. In another embodiment the input features are classified against the database element's features (e.g. using, for example, k-Nearest Neighbor ("k-NN") or Support Vector Machines ("SVM")).

Once the effect or effects are associated with the label or image, the system can output a haptic signal associated with the haptic effect 320. For example, the haptic designer may be presented with a list of haptic effects that could be associated with a shape and select one from the list. Once the designer selects the list, the designer might allow a portion of a game to play so that the designer can feel the effects in the context of the game. Then the designer could make changes to the effects. After each change, the system outputs a haptic signal associated with the haptic effect to a haptic output device by which the designer can feel the effect as a game player would experience the effect.

Embodiments of the invention provide various advantages over conventional design of haptic effects for gaming and other environments having video. For example, embodiments may help to alleviate the time that the user must spend designing new effects or searching for pre-designed effects. Instead, the designer is presented with a list of effects that have already been associated in some manner with the shape with which the designer is interested.
Also, by using machine learning techniques, the system can become more accurate over time in identifying particular shapes, images, or actions. The increased accuracy allows potentially more immersive and accurate effects to be associated with images in a game or video. And by providing a more compelling experience, such embodiments increase the enjoyment of a game or video by a user.

### General Considerations

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor, and the processing, described may be in one or more structures, and may be dispersed through one or more structures. The processor may comprise code for carrying out one or more of the methods (or parts of methods) described herein. While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A non-transitory computer readable medium (104) comprising program code, which when executed by a processor (102) is configured to cause the processor to:
receive (202) an input having a plurality of characteristics, at least one of the plurality of characteristics associated with a first shape;
identify (204) an image or label associated with the first shape;
identify (206) a haptic effect associated with the image or label; and
associate (208) the haptic effect with the first shape.

2. The computer-readable medium (104) of claim 1, further comprising program code, which when executed, is configured to:
identify a second shape in the image; and
identify the haptic effect based at least in part on the similarity between the first shape and the second shape.

3. The computer-readable medium of any of claims 1-2, wherein the image comprises a frame from a video.

4. The computer-readable medium (104) of any of claims 1-3, further comprising program code, which when executed, is configured to suggest a plurality of haptic effects to be associated with the first shape.

5. The computer-readable medium (104) of any of claims 2-4, further comprising program code, which when executed, is configured to:
identify an object associated with the first shape; and
identify the image containing the second shape similar to the first shape by searching for the object in a dataset containing a plurality of images.

6. The computer-readable medium (104) of any of claims 1-5, wherein the input comprises any of:
a gesture;
an image.

7. The computer-readable medium (104) of any of claims 1-6, further comprising program code, which when executed, is configured to associate the haptic effect with the first shape by recording the haptic effect to a haptic track, the haptic track associated with a video.

8. A method (200) comprising:
receiving (202) an input having a plurality of characteristics, at least one of the plurality of characteristics associated with a first shape;
identifying (204) an image or label associated with the first shape;
identifying (206) a haptic effect associated with the image or label; and
associating (208) the haptic effect with the first shape.

9. The method (200) of claim 8, further comprising:
identify a second shape in the image; and
identify the haptic effect based at least in part on the similarity between the first shape and the second shape.

10. The method (200) of any of claims 8-9, further comprising suggesting a plurality of haptic effects to be associated with the first shape.

11. The method (200) of any of claims 9-10, further comprising:
identifying an object associated with the first shape; and
identifying the image containing the second shape similar to the first shape by searching for the object in a dataset containing a plurality of images.

12. The method of any of claims 8-11, wherein the input comprises any of:
a gesture;
an image.

13. The method (200) of any of claims 8-12, further comprising associating the haptic effect with the first shape by recording the haptic effect to a haptic track, the haptic track associated with a video.

14. The method (200) of any of claims 8-13, further comprising outputting the haptic effect to a haptic effect generator (128).

15. A system comprising:
a user input device (112, 116);
a memory (104);
a haptic output device (118); and
a processor (102) in communication with the user input device and memory, the processor configured to:
receive (202) an input having a plurality of characteristics, at least one of the plurality of characteristics associated with a first shape;
identify (204) an image or label associated with the first shape;
identify (206) a haptic effect associated with the image or label;
associate (208) the haptic effect with the first shape; and
transmit (210) a haptic signal associated with the haptic effect to the haptic output device, the haptic signal causing the haptic output device to output the haptic effect.
